# EUROPÄISCHE PATENTSCHRIFT

(11) **EP 0 811 023 B1**
(45) Veröffentlichungstag und Bekanntmachung des Hinweises auf die Patenterteilung: **06.05.1999**
(21) Anmeldenummer: 96904072.4
(22) Anmeldetag: 13.02.1996
(51) Int. Cl.: C08F 12/02, C08F 4/64

(54) **VERFAHREN ZUR HERSTELLUNG VON POLYMERISATEN VON VINYLAROMATISCHEN VERBINDUNGEN UNTER VERWENDUNG VON POLYMERE ENTHALTENDEN KATALYSATORSYSTEMEN**
PROCESS FOR PRODUCING POLYMERS OF VINYL AROMATIC COMPOUNDS USING POLYMER-CONTAINING CATALYST SYSTEMS
PROCEDE DE PRODUCTION DE POLYMERES DE COMPOSES VINYLAROMATIQUES AU MOYEN DE SYSTEMES CATALYSEURS CONTENANT DES POLYMERES

(30) Priorität: 24.02.1995 DE 19506554; 24.02.1995 DE 19506556
(43) Veröffentlichungstag der Anmeldung: 10.12.1997
(73) Patentinhaber: BASF AKTIENGESELLSCHAFT, 67056 Ludwigshafen (DE)
(72) Erfinder: WÜNSCH, Josef, D-67105 Schifferstadt (DE); LUX, Martin, D-67125 Dannstadt-Schauernheim (DE); FISCHER, David, D-67161 Gönnheim (DE)
(86) Internationale Anmeldenummer: EP9600600
(87) Internationale Veröffentlichungsnummer: WO9626227

(56) Entgegenhaltungen:
- EP-A- 0 008 409
- EP-A- 0 206 794
- EP-A- 0 535 582
- DE-A- 2 412 105

## Beschreibung

Die vorliegende Erfindung betrifft Verfahren zur Herstellung von Polymerisaten von vinylaromatischen Verbindungen bei Temperaturen im Bereich von 0 bis 150°C in Gegenwart von Katalysatorsystemen.

Weiterhin betrifft die vorliegende Erfindung die Verwendung der hierbei erhältlichen Polymerisate zur Herstellung von Formkörpern.

Polymerisate von vinylaromatischen Verbindungen, insbesondere Polystyrole, finden aufgrund ihres Eigenschaftsprofils in vielen Bereichen Verwendung, beispielsweise als Verpackungsmaterialien oder als Isolierüberzüge für Metalle oder Kunststoffe, speziell bei elektrischen Anwendungen.

Ein Verfahren zur Herstellung von isotaktischem Polystyrol wird in der GB-A 826 021 beschrieben. Isotaktisches Polystyrol kristallisiert jedoch so langsam, daß es nur unzureichend im Spritzguß verarbeitet werden kann.

Verfahren zur Herstellung von syndiotaktischem Polystyrol durch Umsetzung von Styrol in Gegenwart eines Metallocenkomplexes und eines Cokatalysators sind beispielsweise in der EP-A 535 582 und der EP-A 584 646 beschrieben. Syndiotaktisches Polystyrol weist eine hohe Chemikalienbeständigkeit, hohe Steifigkeit, gute Dimensionsstabilität und gute dielektrische Eigenschaften auf. Die in den genannten Schriften beschriebenen Verfahren haben jedoch den Nachteil, daß die Katalysatoren nicht sofort aktiv sind.

Der vorliegenden Erfindung lag daher die Aufgabe zugrunde, neue Verfahren zur Herstellung von Polymerisaten von vinylaromatischen Verbindungen zur Verfügung zu stellen, die die genannten Nachteile nicht zeigen, die insbesondere technisch wenig aufwendig sind, bei denen die Katalysatoren sofort aktiv sind und sich gut vom entstandenen Polymerisat abtrennen lassen und die zu syndiotaktischen Polymerisaten führen.

Demgemäß wurden Verfahren zur Herstellung von Polymerisaten von vinylaromatischen Verbindungen bei Temperaturen im Bereich von 0 bis 150°C in Gegenwart von Katalysatorsystemen gefunden, wobei als Katalysatorsysteme solche verwendet werden, die als aktive Bestandteile
A) Verbindungen der allgemeinen Formel I

   XM(Z¹)_{z₁} (Z²)_{z₂} (Z³)_{z₃} (I)

   in der die Substituenten und Indices folgende Bedeutung haben:
   - X: C₁- bis C₁₀-Alkyl, 5- bis 7-gliedriges Cycloalkyl, C₁- bis C₁₀-Alkoxy, C₆- bis C₁₅-Aryl oder Verbindungen der allgemeinen Formel II 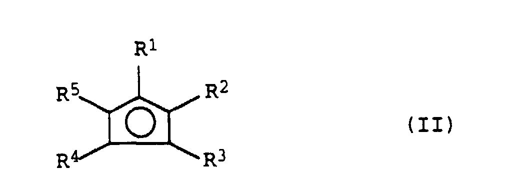
   - mit R¹ bis R⁵: Wasserstoff, C₁- bis C₁₀-Alkyl, das 1- bis 5fach mit Halogen substituiert sein kann, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste gemeinsam für 4 bis 15 C-Atome aufweisende cyclische Gruppen stehen können, oder Halogen, C₁- bis C₁₀-Alkoxy, NR⁶R⁷ oder Si(R⁶)₃,
   - mit R⁶ und R⁷: Wasserstoff, C₁- bis C₁₀-Alkyl, C₆- bis C₁₅-Aryl oder C₃-bis C₁₀-Cycloalkyl,
   - M: ein Metall der II. bis VIII. Nebengruppe des Periodensystems der Elemente
   - Z¹ bis Z³: Polymere von vinylaromatischen Verbindungen, Dienen, Acrylaten oder deren Mischungen
   und
   - z₁ bis z₃: 0, 1, 2 oder 3, wobei 1 ≤ z₁+z₂+z₃ ≤ 3 ist,
   und
B) offenkettige oder cyclische Alumoxanverbindungen der allgemeinen Formel III oder IV 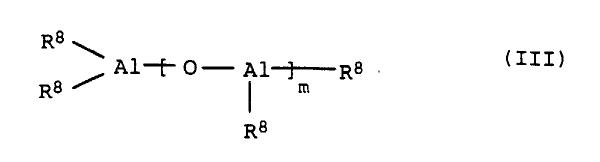 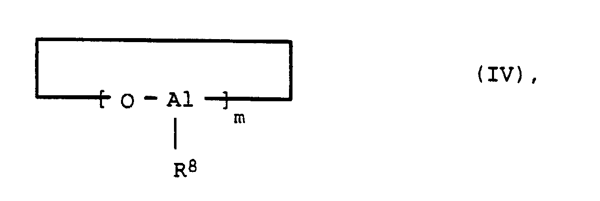 wobei R⁸ eine C₁- bis C₄-Alkylgruppe bedeutet und m für eine ganze Zahl von 5 bis 30 steht,
   oder
   metalloceniumionenbildende Verbindungen, ausgewählt aus der Gruppe bestehend aus starken, neutralen Lewissäuren, ionischen Verbindungen mit lewissaurem Kation und ionischen Verbindungen mit einer Brönsted-Saure als Kation
enthalten.

Weiterhin wurde die Verwendung der hierbei erhältlichen Polymerisate zur Herstellung von Formkörpern gefunden.

Als vinylaromatische Verbindungen eignen sich besonders Verbindungen der allgemeinen Formel V 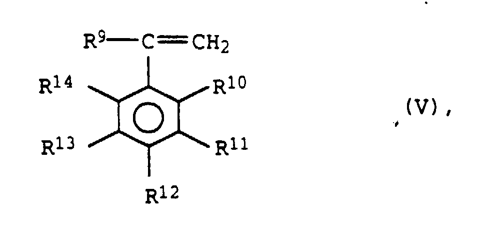 in der die Substituenten folgende Bedeutung haben:
- R⁹: Wasserstoff oder C₁- bis C₄-Alkyl,
- R¹⁰ bis R¹⁴: unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen stehen.

Bevorzugt werden vinylaromatische Verbindungen der Formel V eingesetzt, in denen
- R⁹: Wasserstoff bedeutet
und
- R¹⁰ bis R¹⁴: für Wasserstoff, C₁- bis C₄-Alkyl, Chlor oder Phenyl stehen oder wobei zwei benachbarte Reste gemeinsam für 4 bis 12 C-Atome aufweisende cyclische Gruppen stehen, so daß sich als Verbindungen der allgemeinen Formel V beispielsweise Naphthalinderivate oder Anthracenderivate ergeben.

Beispiele für solche bevorzugten Verbindungen sind:
Styrol, p-Methylstyrol, p-Chlorstyrol, 2,4-Dimethylstyrol, 4-Vinylbiphenyl, 2-Vinylnaphthalin oder 9-Vinylanthracen.

Es können auch Mischungen verschiedener vinylaromatischer Verbindungen eingesetzt werden, vorzugsweise wird jedoch nur eine vinylaromatische Verbindung verwendet.

Besonders bevorzugte vinylaromatische Verbindungen sind Styrol und p-Methylstyrol.

Die Herstellung von vinylaromatischen Verbindungen der allgemeinen Formel V ist an sich bekannt und beispielsweise in Beilstein 5, 367, 474, 485 beschrieben.

Bei den erfindungsgemaßen Verfahren werden als Komponente A) Verbindungen der allgemeinen Formel I eingesetzt. Von diesen Verbindungen I sind diejenigen bevorzugt, in denen X für C₁- bis C₄-Alkyl, insbesondere Methyl und Ethyl, C₁- bis C₄-Alkoxy oder besonders bevorzugt für Verbindungen der allgemeinen Formel II 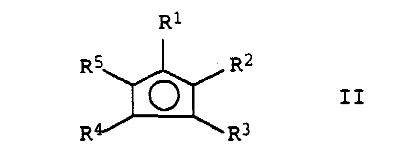 steht.

Von den Verbindungen der allgemeinen Formel II sind diejenigen bevorzugt, in denen R¹ bis R⁵ Wasserstoff, C₁- bis C₄-Alkyl, insbesondere Methyl, C₆- bis C₁₅-Aryl, insbesondere Phenyl und Biphenyl, bedeutet oder wobei zwei benachbarte Reste gemeinsam für 4 bis 15 C-Atome aufweisende cyclische Gruppen stehen, beispielsweise steht X dann für Indenyl, Benzindenyl oder Fluorenyl, wobei diese wiederum mit Alkylresten substituiert sein können.

Besonders bevorzugt steht X für Pentamethylcyclopentadienyl.

Für den Fall, daß X für Verbindungen der allgemeinen Formel II steht, stellen die Verbindungen der allgemeinen Formel I Halbsandwichkomplexe dar.

Das Metall M steht vorzugsweise für Elemente der IV. bis VI. Nebengruppe des Periodensystems, insbesondere für Elemente der IV. Nebengruppe, also für Titan, Zirkonium und Hafnium, bevorzugt für Titan.

Z¹ bis Z³ stehen für Polymere von vinylaromatischen Verbindungen, Dienen wie Butadiene oder Isopren, Acrylate, vorzugsweise mit 1 bis 6 C-Atomen im Esterrest, insbesondere Butylacrylat oder deren Mischungen, so daß Z¹ bis Z³ dann Copolymerisate darstellen.

Bevorzugt stehen Z¹ bis Z³ für Polymere von vinylaromatischen Verbindungen der allgemeinen Formel VI 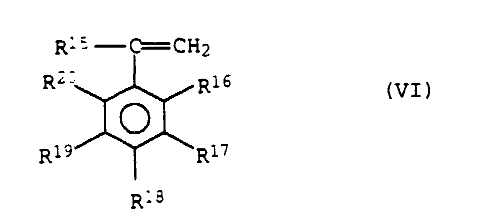 in der die Substituenten folgende Bedeutung haben:
- R¹⁵: Wasserstoff oder C₁- bis C₄-Alkyl,
- R¹⁶ bis R²⁰: unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen stehen.

Bevorzugt sind vinylaromatische Verbindungen der Formel VI, in denen
- R¹⁵: Wasserstoff bedeutet
und
- R¹⁶ bis R²⁰: für Wasserstoff, C₁- bis C₄-Alkyl, Chlor oder Phenyl stehen oder wobei zwei benachbarte Reste gemeinsam für 4 bis 15 C-Atome aufweisende cyclische Gruppen stehen, so daß sich als Verbindungen der allgemeinen Formel VI beispielsweise Naphthalinderivate oder Anthracenderivate ergeben.

### Beispiele für solche bevorzugten Verbindungen sind ebenfalls

Styrol, p-Methylstyrol, p-Chlorstyrol, 2,4-Dimethylstyrol, 4-Vinylbiphenyl, 2-Vinylnaphthalin oder 9-Vinylanthracen.

Besonders bevorzugte vinylaromatische Verbindungen der Formel VI sind Styrol und p-Methylstyrol.

Vorzugsweise sind Z¹ bis Z³ Polymere aus den gleichen Verbindungen, besonders bevorzugt Polystyrole. Die Molekulargewichte Mₙ (Zahlenmittelwerte) der jeweiligen Z¹ bis Z³ liegen i.a. im Bereich von 500 bis 10⁸ g/mol, vorzugsweise im Bereich von 10³ bis 10⁶ g/mol.

Es hat sich als besonders geeignet erwiesen, wenn Z¹ bis Z³ Polymere aus den gleichen Verbindungen, vorzugsweise Polystyrole, sind und die erfindungsgemäß hergestellten Polymerisate solche sind, bei denen als vinylaromatische Verbindungen V die gleichen Verbindungen eingesetzt werden wie die, die zu Z¹ bis Z³ führen, also ebenfalls Styrol.

Eine besonders bevorzugte Verbindung der Formel I ist diejenige, bei der X für Pentamethylcyclopentadienyl steht, M für Titan und Z¹ bis Z³ Polystyrole bedeuten.

Die Anzahl z₁, z₂, z₃ der jeweiligen Polymere Z¹, Z², Z³ hängt wesentlich vom Metall M ab. Für den bevorzugten Fall, daß M ein Metall der IV. Nebengruppe des Periodensystems der Elemente ist, ist die Summe z₁+z₂+z₃ vorzugsweise 3.

Die Polymere Z¹ bis Z³ sind in den Verbindungen der Formel I kovalent an das Metall M gebunden.

Die Verbindungen der allgemeinen Formel I können dadurch hergestellt werden, daß die zu den Polymeren Z¹ bis Z³ führenden vinylaromatischen Verbindungen, Diene, Acrylate oder deren Mischungen anionisch polymerisiert und dann mit einem Übergangsmetallsalz der allgemeinen Formel VII

XMY_{y} (VII)

- mit Y: Fluor, Chlor, Brom oder Jod
- und y: 1, 2 oder 3
umgesetzt werden.

Die anionische Polymerisation von vinylaromatischen Verbindungen, Dienen, Acrylaten oder deren Mischungen ist an sich bekannt und in Maurice Morton, Anionic Polymerization: Principles and Practice, Academic Press, 1983, beschrieben. Üblicherweise erfolgt die anionische Polymerisation durch Zugabe von Alkalimetallverbindungen, beispielsweise Phenyllithium, Natriummethylat, n-Butyllithium oder sec.-Butyllithium zu dem Monomeren. Zu diesen noch lebenden, anionischen Polymeren wird dann ein Übergangsmetallsalz der allgemeinen Formel VII hinzugegeben. Von diesen Salzen sind diejenigen bevorzugt, in denen Y für Chlor oder Brom, insbesondere für Chlor steht.

Bezüglich der bevorzugten Verbindungen, die zu den Polymeren Z¹ bis Z³ führen sowie des Substituenten X und des Metalls M in der allgemeinen Formel VII gilt das bei den Verbindungen der allgemeinen Formel I Gesagte.

Die Reaktionsbedingungen zur Herstellung der Verbindungen der Formel I sind an sich nicht kritisch. Die Reaktionstemperatur liegt i.a. im Bereich von -75 bis 150°C, bevorzugt von -10 bis 100°C.

Die molare Menge an Übergangsmetallsalz beträgt vorzugsweise 0,001 bis 2,0 Mol-Äquivalente, bezogen auf die Menge an Alkalimetallverbindungen bei der anionischen Polymerisation.

Es hat sich als geeignet erwiesen, wenn das Übergangsmetallsalz der allgemeinen Formel VII in einem inerten Lösungsmittel gelöst ist. Als Lösungsmittel eignen sich Kohlenwasserstoffe wie Pentan oder Hexan, Benzol, Toluol, Xylole, Ether wie Diethylether oder Tetrahydrofuran oder deren Gemische.

Die Komponente A) kann entweder gesondert hergestellt und isoliert werden oder aber auch direkt vor der Polymerisation in situ hergestellt werden.

Bei den erfindungsgemäßen Verfahren zur Herstellung von Polymerisaten von vinylaromatischen Verbindungen können als Komponente B) offenkettige oder cyclische Alumoxanverbindungen der allgemeinen Formel III oder IV 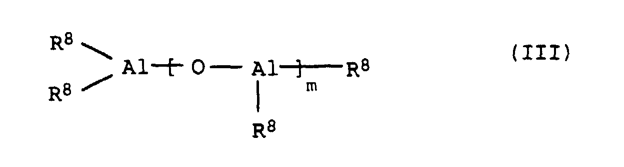 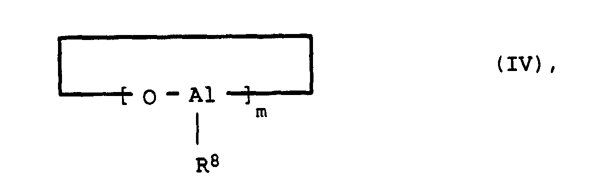 wobei R⁸ eine C₁- bis C₄-Alkylgruppe bedeutet, bevorzugt Methyl- oder Ethylgruppe und m für eine ganze Zahl von 5 bis 30, bevorzugt 10 bis 25 steht, eingesetzt werden.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen konnen auch im Gemisch mit anderen Metallalkylen, bevorzugt mit Aluminiumalkylen vorliegen.

Bei den erfindungsgemaßen Verfahren zur Herstellung von Polymerisaten von vinylaromatischen Verbindungen können als Komponente B) auch metalloceniumionenbildende Verbindungen, ausgewählt aus der Gruppe bestehend aus starken, neutralen Lewissäuren, ionischen Verbindungen mit lewissaurem Kation und ionischen Verbindungen mit einer Brönsted-Säure als Kation eingesetzt werden.

Als starke neutrale Lewissäuren sind Verbindungen der allgemeinen Formel VIII

M¹X¹X²X³ (VIII)

bevorzugt, in der
- M¹: ein Element der III. Hauptgruppe des Periodensystems bedeutet, insbesondere B, Al oder Ga, vorzugsweise B,
- X¹, X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel VIII, in der X¹, X² und X³ gleich sind, vorzugsweise Tris(pentafluorphenyl)boran.

Als ionische Verbindungen mit lewissäuren Kationen sind Verbindungen der allgemeinen Formel IX

[(A^{a+})Q₁Q₂...Q_{z}]^{d+} (IX)

geeignet, in denen
- A: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁-bis C₂₈-Alkoxy, C₆- bis C₁₅-Aryloxy, Silyl- oder Mercaptylgruppen
- a: für ganze Zahlen von 1 bis 6 steht,
- z: für ganze Zahlen von 0 bis 5
- d: der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen.

Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die erfindungsgemäße Polymerisation der vinylaromatischen Verbindungen kann in Lösung, in Masse, in Suspension oder in der Gasphase erfolgen. Bevorzugt arbeitet man in Lösung, wobei als Lösungsmittel beispielsweise aromatische Kohlenwasserstoffe wie Benzol, Toluol, Ethylbenzol oder Xylole, sowie Ether wie Diethylether, Dibutylether, Ethylenglykoldimethylether oder Tetrahydrofuran, oder auch aliphatische Kohlenwasserstoffe wie Propan, n-Butan, iso-Butan oder Pentane, sowie Mischungen der verschiedenen Lösungsmittel verwendet werden können, oder in Masse.

Die Polymerisationsbedingungen sind an sich unkritisch, geeignet sind Temperaturen im Bereich von 0 bis 150°C, vorzugsweise von 10 bis 100°C, Drücke von 0,1 bis 100 bar, vorzugsweise von 1 bis 5 bar und Polymerisationszeiten von 0,1 bis 24 Stunden, vorzugsweise von 0,5 bis 6 Stunden.

Die Verbindungen der allgemeinen Formel I werden vorzugsweise ungeträgert eingesetzt, sie konnen jedoch auch geträgert verwendet werden.

Geeignete Trägermaterialien sind beispielsweise Kieselgele, bevorzugt solche der Formel SiO₂ · aAl₂O₃, worin a für eine Zahl im Bereich von 0 bis 2 steht, vorzugsweise 0 bis 0,5; also im wesentlichen Alumosilikate oder Siliciumdioxid. Vorzugsweise weisen die Träger einen Teilchendurchmesser im Bereich von 1 bis 200 µm auf, insbesondere 30 bis 80 µm. Derartige Produkte sind im Handel erhältlich, z.B. als Silica Gel 332 der Firma Grace.

Weitere Träger sind u.a. feinteilige Polyolefine, beispielsweise feinteiliges Polypropylen oder Polyethylen, aber auch Polyethylenglykol, Polybutylenterephthalat, Polyethylenterephthalat, Polyvinylalkohol, Polystyrol, Polybutadien, Polycarbonate oder deren Copolymere.

Es hat sich als vorteilhaft erwiesen, die Komponente A) und die oligomere Alumoxanverbindung (Komponente B)) in solchen Mengen zu verwenden, daß das atomare Verhältnis zwischen Aluminium aus der oligomeren Alumoxanverbindung und dem Übergangsmetall aus den Verbindungen der Formel I im Bereich von 10:1 bis 10⁶:1, insbesondere im Bereich von 10:1 bis 10⁴:1, liegt.

Als Lösungsmittel für diese Katalysatorsysteme werden üblicherweise aromatische Kohlenwasserstoffe eingesetzt, bevorzugt mit 6 bis 20 C-Atomen, insbesondere Xylole und Toluol sowie deren Mischungen.

Es hat sich auch als vorteilhaft erwiesen, die Komponente A) und die Komponente B) (metalloceniumionenbildende Verbindung) in solchen Mengen zu verwenden, daß das molare Verhältnis zwischen der Komponente B) und der Komponente A) im Bereich von 100:1 bis 0,01:1, insbesondere im Bereich von 10:1 bis 0,1:1, liegt.

Die Komponenten A) und B) können getrennt voneinander zur Reaktionsmischung gegeben oder vor der Polymerisationsreaktion miteinander gemischt werden.

Vorzugsweise geht man nun bei den erfindungsgemäßen Verfahren so vor, daß man die vinylaromatische Verbindung, gegebenenfalls mit einem Lösungsmittel versetzt, vorlegt, auf Temperaturen im Bereich von 40 bis 80° erwärmt und die offenkettige oder cyclische Alumoxanverbindung gegebenenfalls mit einem Lösungsmittel versetzt, hinzugibt. Anschließend gibt man dann die Verbindung der allgemeinen Formel I, gegebenenfalls mit einem Lösungsmittel, hinzu. Vorzugsweise wird dann über einen Zeitraum von 45 bis 90 Minuten polymerisiert und die Polymerisation durch Zugabe von Methanol abgebrochen. Das erhaltene Polymerisat wird vorzugsweise mit Methanol gewaschen und bei 40 bis 100°C getrocknet.

Das erfindungsgemäße Verfahren zeichnet sich dadurch aus, daß es technisch wenig aufwendig ist, daß die Katalysatoren sofort aktiv sind und sich gut vom entstandenen Polymerisat abtrennen lassen, die entstehenden Polymerisate sind syndiotaktisch und eignen sich insbesondere zur Verwendung von Formmassen in elektrischen oder hochtemperaturbeständigen Anwendungen. Die Molmassen der nach dem erfindungsgemaßen Verfahren hergestellten Polymerisate liegen im Bereich von 10.000 bis 10.000.000 g/mol, vorzugsweise von 50.000 bis 1.000.000 g/mol.

### Beispiele

### Beispiel 1

### Herstellung von Pentamethylcyclopentadienyl-tris-(polystyryl)-titanat I1

Unter Inertgasatmosphäre wurden in einem 500 ml Kolben 31,25 g (0,3 mol) unstabilisiertes Styrol in 200 ml n-Hexan gelöst und auf 60°C erwärmt.

Zu dieser Mischung wurden dann bei 60°C 60 mmol sec.-Butyllithium gegeben und unter Inertgasatmosphäre 1 Stunde polymerisiert.

Anschließend wurde diese Mischung zu 5,0 g (18,22 mmol) Pentamethylcyclopentadienyltitantrichlorid in 125 ml n-Hexan gegeben und auf 0°C gekühlt. Dann wurde 12 Stunden bei Raumtemperatur gerührt. Das entstandene Produkt wurde unter Inertgasatmosphäre von unlöslichen Bestandteilen abgetrennt (Glasfritte, 4 µm) und am Vakuum eingeengt

### Beispiel 2

### Herstellung von syndiotaktischem Polystyrol

In einem mit Stickstoff inertisierten Rundkolben wurden 0,6 mol Styrol (62,5 g) vorgelegt, auf 50°C erwärmt und mit 3,0 ml Methylaluminoxan (MAO) der Firma Witco (1,67 molar in Toluol) versetzt. Anschließend versetzte man die Mischung mit 320 mg (16,65 10⁻⁵ mol) und an I1. Nun wurden weitere 26,9 ml des obengenannten MAO hinzugegeben. Die Innentemperatur wurde auf 50°C einreguliert und man ließ 1 Stunde polymerisieren. Anschließend wurde die Polymerisation durch Zugabe von Methanol abgebrochen. Das erhaltene Polymere wurde mit Methanol gewaschen und bei 50°C im Vakuum getrocknet. Das Molekulargewicht M_{W} (Gewichtsmittelwert) und die Molmassenverteilung wurden durch Hochtemperatur-GPC (Gelpermeationschromatographie) mit 1,2,4-Trichlorbenzol als Lösungsmittel bei 135°C bestimmt. Die Kalibrierung erfolgte mit engverteilten Polystyrolstandards. Die Molmasse betrug M_{w} = 42 800 mit einer Verteilungsbreite von M_{w}/Mₙ = 1,81. Der syndiotaktische Anteil bestimmt nach ¹³C-NMR war >96 %.

### Beispiel 3

### Herstellung von syndiotaktischem Polystyrol

In einem mit Stickstoff inertisierten Rundkolben wurden 0,6 mol Styrol (62,5 g) in 217 ml Ethylbenzol vorgelegt, die Mischung auf 50°C erwärmt und mit 2,65 g (15,15 ml ≙ 1,33 · 10⁻² mol) Tri-isobutylaluminium versetzt. Nach 2 Minuten wurden 85,3 mg (16,7 · 10⁻⁵ mol) Tris(pentafluorphenyl)boran zugegeben. Anschließend versetzte man die Mischung mit 320 mg (16,65 · 10⁻⁵ mol) an I1. Die Innentemperatur wurde auf 50°C einreguliert und man ließ 5 Stunden polymerisieren. Anschließend wurde die Polymerisation durch Zugabe von Methanol abgebrochen. Das erhaltene Polymere wurde mit Methanol gewaschen und bei 50°C im Vakuum getrocknet. Das Molekulargewicht M_{W} (Gewichtsmittelwert) und die Molmassenverteilung wurden durch Hochtemperatur-GPC (Gelpermeationschromatographie) mit 1,2,4-Trichlorbenzol als Lösungsmittel bei 135°C bestimmt. Die Kalibrierung erfolgte mit engverteilten Polystyrolstandards. Die Molmasse betrug M_{w} = 5200 mit einer Verteilungsbreite von M_{w}/Mₙ = 1,99. Der syndiotaktische Anteil bestimmt nach ¹³C-NMR war >96 %.

## Patentansprüche

1. Verfahren zur Herstellung von Polymerisaten von vinylaromatischen Verbindungen bei Temperaturen im Bereich von 0 bis 150°C in Gegenwart von Katalysatorsystemen, dadurch gekennzeichnet, daß als Katalysatorsysteme solche verwendet werden, die als aktive Bestandteile
A) Verbindungen der allgemeinen Formel I
XM(Z¹)_{z₁} (Z²)_{z₂} (Z³)_{z₃} (I)
in der die Substituenten und Indices folgende Bedeutung haben:
X C₁- bis C₁₀-Alkyl, 5- bis 7-gliedriges Cycloalkyl, C₁- bis C₁₀-Alkoxy, C₆- bis C₁₅-Aryl oder Verbindungen der allgemeinen Formel II 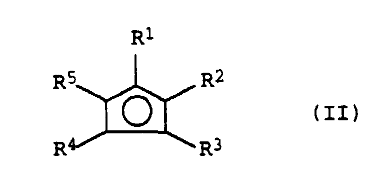
mit R¹ bis R⁵ Wasserstoff, C₁- bis C₁₀-Alkyl, das 1- bis 5fach mit Halogen substituiert sein kann, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste gemeinsam für 4 bis 15 C-Atome aufweisende cyclische Gruppen stehen können, oder Halogen, C₁- bis C₁₀-Alkoxy, NR⁶R⁷ oder Si(R⁶)₃,
mit R⁶ und R⁷ Wasserstoff, C₁- bis C₁₀-Alkyl, C₆- bis C₁₅-Aryl oder C₃- bis C₁₀-Cycloalkyl,
M ein Metall der II. bis VIII. Nebengruppe des Periodensystems der Elemente
Z¹ bis Z³ Polymere von vinylaromatischen Verbindungen, Dienen, Acrylaten oder deren Mischungen
und
z₁ bis z₃ 0, 1, 2 oder 3, wobei 1 ≤ z₁+z₂+z₃ ≤ 3 ist,
und
B) offenkettige oder cyclische Alumoxanverbindungen der allgemeinen Formel III oder IV 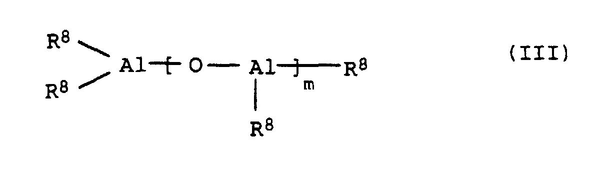 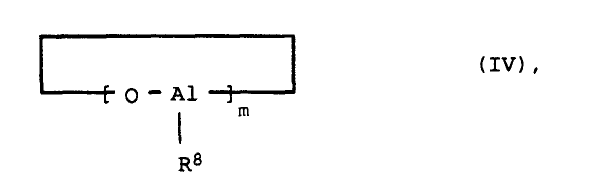 wobei R⁸ eine C₁- bis C₄-Alkylgruppe bedeutet und m für eine ganze Zahl von 5 bis 30 steht,
oder
metalloceniumionenbildende Verbindungen, ausgewählt aus der Gruppe bestehend aus starken, neutralen Lewissäuren, ionischen Verbindungen mit lewissaurem Kation und ionischen Verbindungen mit einer Brönsted-Säure als Kation
enthalten.

2. Verfahren nach Anspruch 1, dadurch gekennzeichnet, daß als vinylaromatische Verbindungen Verbindungen der allgemeinen Formel V 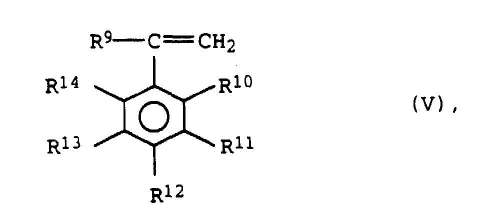 in der die Substituenten folgende Bedeutung haben:
R⁹ Wasserstoff oder C₁- bis C₄- Alkyl,
R¹⁰ bis R¹⁴ unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen stehen
eingesetzt werden.

3. Verfahren nach den Ansprüchen 1 bis 2, dadurch gekennzeichnet, daß als vinylaromatische Verbindungen der allgemeinen Formel V solche eingesetzt werden, in denen
R⁹ Wasserstoff bedeutet
und
R¹⁰ bis R¹⁴ für Wasserstoff, C₁- bis C₄- Alkyl, Chlor oder Phenyl stehen, oder wobei zwei benachbarte Reste gemeinsam für 4 bis 12 C-Atome aufweisende cyclische Gruppen stehen.

4. Verfahren nach den Ansprüchen 1 bis 3, dadurch gekennzeichnet, daß als Komponente A) Verbindungen der allgemeinen Formel I eingesetzt werden, in denen
X für Verbindungen der allgemeinen Formel II steht,
M ein Metall der IV. bis VI. Nebengruppe bedeutet
und
Z¹ bis Z³ für Polymere von vinylaromatischen Verbindungen der allgemeinen Formel VI 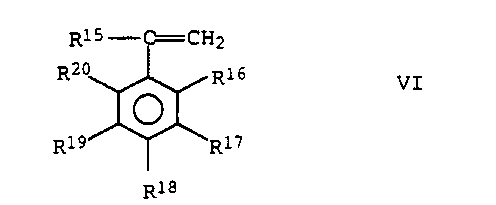 in der die Substituenten folgende Bedeutung haben:
R¹⁵ Wasserstoff oder C₁- bis C₄-Alkyl,
R¹⁶ bis R²⁰ unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atom C-Atome aufweisende cyclische Gruppen stehen,
stehen.

5. Verfahren nach den Ansprüchen 1 bis 4, dadurch gekennzeichnet, daß als Komponente B) starke, neutrale Lewissäuren der allgemeinen Formel
M¹X¹X²X³ (VIII)
in der
M¹ ein Element der III. Hauptgruppe des Periodensystems bedeutet,
X¹, X² und X³ für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen
eingesetzt werden.

6. Verwendung der gemäß den Ansprüchen 1 bis 4 hergestellten Polymerisate von vinylaromatischen Verbindungen zur Herstellung von Formkörpern.

## Claims

1. A process for preparing polymers of vinylaromatic compounds at from 0 to 150°C in the presence of catalyst systems which comprise as active constituents
A) compounds of the formula I
XM(Z¹)_{z₁}(Z²)_{z₂} (Z³)_{z₃} (I)
where the substituents and indices have the following meanings:
X is C₁-C₁₀-alkyl, 5- to 7-membered cycloalkyl, C₁-C₁₀-alkoxy, C₆-C₁₅-aryl or a compound of the formula II 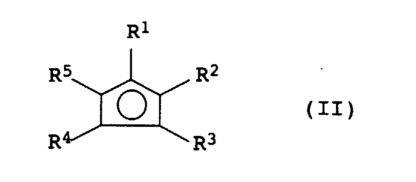
where R¹ to R⁵ are hydrogen, C₁-C₁₀-alkyl, which may bear from 1 to 5 halogen substituents, 5- to 7-membered cycloalkyl which in turn may bear C₁-C₆-alkyl groups as substituents, C₆- C₁₅-aryl or arylalkyl, where, if desired, two adjacent radicals can together form a cyclic group having from 4 to 15 carbon atoms, or halogen, C₁-C₁₀-alkoxy, NR⁶R⁷ or Si(R⁶)₃,
where R⁶ and R⁷ are hydrogen, C₁-C₁₀-alkyl, C₆-C₁₅-aryl or C₃-C₁₀-cycloalkyl,
M is a metal of transition groups II to VIII of the Periodic Table of the Elements,
Z¹ to Z³ are polymers of vinylaromatic compounds, dienes, acrylates or mixtures thereof
and
z₁ to z₃ are 0, 1, 2 or 3, where 1 ≤ z₁+z₂+z₃ ≤ 3,
and
B) linear or cyclic aluminoxane compounds of the formula III or IV 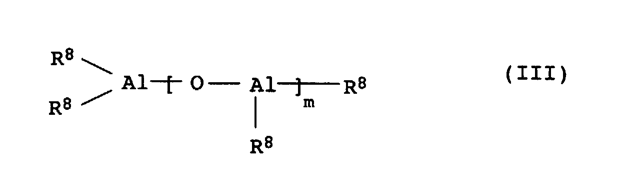 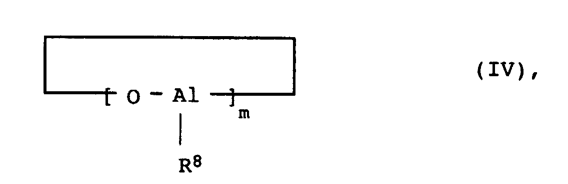 where R⁸ is a C₁-C₄-alkyl group and m is an integer from 5 to 30,
or
compounds which form metallocenium ions and are selected from the group consisting of strong, uncharged Lewis acids, ionic compounds having a Lewis-acid cation and ionic compounds having a Brönsted acid as cation.

2. A process as claimed in claim 1, wherein the vinylaromatic compounds used are compounds of the formula V 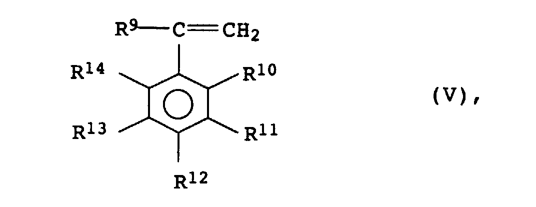 where the substituents have the following meanings:
R⁹ is hydrogen or C₁-C₄-alkyl,
R¹⁰ to R¹⁴ are, independently of one another, hydrogen, C₁-C₁₂-alkyl, C₆-C₁₈-aryl, halogen or two adjacent radicals may together form a cyclic group having from 4 to 15 carbon atoms.

3. A process as claimed in claim 1 or 2, wherein the vinylaromatic compounds of the formula V which are used are ones in which
R⁹ is hydrogen
and
R¹⁰ to R¹⁴ are hydrogen, C₁-C₄-alkyl, chlorine or phenyl or two adjacent radicals may together form a cyclic group having from 4 to 12 carbon atoms.

4. A process as claimed in any of claims 1 to 3, wherein the component A) used comprises compounds of the formula I in which
X is a compound of the formula II,
M is a metal of transition groups IV to VI
and
Z¹ to Z³ are polymers of vinylaromatic compounds of the formula VI 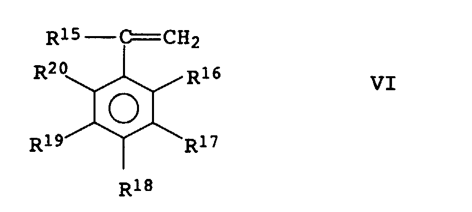 where the substituents have the following meanings:
R¹⁵ is hydrogen or C₁-C₄-alkyl,
R¹⁶ to R²⁰ are, independently of one another, hydrogen, C₁-C₁₂-alkyl, C₆-C₁₈-aryl, halogen or two adjacent radicals may together form a cyclic group having from 4 to 15 carbon atoms.

5. A process as claimed in any of claims 1 to 4, wherein the component B) used comprises strong, uncharged Lewis acids of the formula
M¹X¹X²X³ (VIII)
where
M¹ is an element of main group III of the Periodic Table,
X¹, X² and X³ are hydrogen, C₁-C₁₀-alkyl, C₆-C₁₅-aryl, alkylaryl, arylalkyl, haloalkyl or haloaryl each having from 1 to 10 carbon atoms in the alkyl radical and from 6 to 20 carbon atoms in the aryl radical, or fluorine, chlorine, bromine or iodine.

6. Use of the polymers of vinylaromatic compounds prepared as claimed in any of claims 1 to 4 for producing moldings.

## Revendications

1. Procédé de préparation de polymères de composés vinylaromatiques à des températures qui varient de 0 à 150°C et en présence de systèmes catalytiques, caractérisé en ce que, à titre de systèmes catalytiques, on utilise ceux qui contiennent comme constituants actifs
A) des composés de la formule générale I
XM(Z¹)_{z₁} (Z²)_{z₂} (Z³)_{z₃} (I)
dans laquelle les substituants et les indices ont les significations suivantes :
X alkyle en C₁ à C₁₀, cycloalkyle pentagonal ou heptagonal, alcoxy en C₁ à C₁₀, aryle en C₆ à C₁₅, ou des composés de la formule générale II 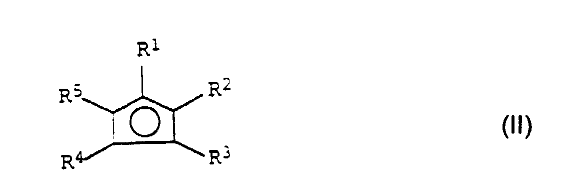
avec R¹ à R⁵ qui ont les significations suivantes hydrogène, alkyle en C₁ à C₁₀, qui peut être substitué de 1 à 5 fois par des halogènes, cycloalkyle pentagonal à heptagonal, qui peut, à son tour, porter des radicaux alkyle en C₁ à C₆, à titre de substituants, arylalkyle ou aryle en C₆ à C₁₅ et où éventuellement aussi deux restes voisins peuvent représenter des radicaux cycliques comportant de 4 à 15 atomes de carbone, ou des halogènes, alcoxy en C₁ à C₁₀, NR⁶R⁷ ou Si(R⁶)₃,
avec R⁶ et R⁷ qui possèdent les significations suivantes hydrogène, alkyle en C₁ à C₁₀, aryle en C₆ à C₁₅ ou cycloalkyle en C₃ à C₁₀,
M un métal du deuxième au huitième sous-groupes du système périodique des éléments
Z¹ à Z³ possèdent les significations suivantes polymères de composés vinylaromatiques, diènes, acrylates, ou leurs mélanges
et
z₁ à z₃ sont égaux à 0, 1, 2 ou 3, où 1 ≤ z₁+z₂+z₃ ≤ 3,
et
B) des composés d'alumoxanne à chaîne ouverte ou cycliques de la formule générale III ou IV 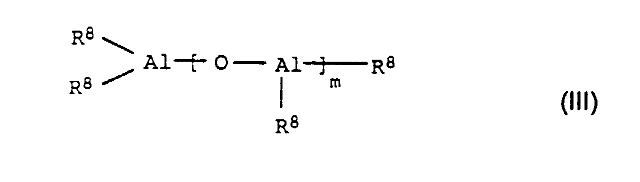 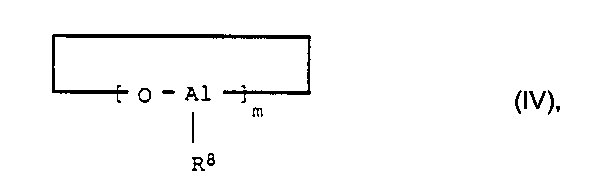 dans lesquelles R⁸ représente un radical alkyle en C₁ à C₄ et m représente un nombre entier dont la valeur varie de 5 à 30,
ou bien
des composés qui engendrent des ions métallocénium, choisis dans le groupe formé par des acides de Lewis forts, neutres, des composés ioniques avec un cation d'acide de Lewis et des composés ioniques avec un acide de Brönsted, à titre de cation.

2. Procédé suivant la revendication 1, caractérisé en ce que, à titre de composés vinylaromatiques, on met en oeuvre des composés de la formule générale V 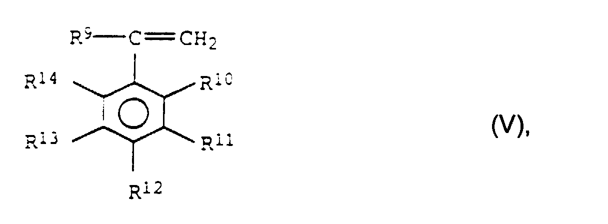 dans laquelle les substituants ont les significations qui suivent:
R⁹ hydrogène ou alkyle en C₁ à C₄,
R¹⁰ à R¹⁴, indépendamment l'un de l'autre, hydrogène, alkyle en C₁ à C₁₂, aryle en C₆ à C₁₈, halogènes ou où deux restes voisins forment ensemble des radicaux cycliques présentant de 4 à 15 atomes de carbone.

3. Procédé suivant l'une quelconque des revendications 1 et 2, caractérisé en ce que, à titre de composés vinylaromatiques, on met en oeuvre des composés de la formule générale V, dans lesquels
R⁹ représente l'hydrogène et
et
R¹⁰ à R¹⁴ représentent l'hydrogène, des radicaux alkyle en C₁ à C₄, l'atome de chlore ou le radical phényle, ou où deux restes voisins forment ensemble des radicaux cycliques présentant de 4 à 12 atomes de carbone.

4. Procédé suivant l'une quelconque des revendications 1 à 3, caractérisé en ce que, à titre de composant A), on met en oeuvre des composés de la formule générale I, dans lesquels
X représente des composés de la formule générale II,
M représente un métal du quatrième au sixième sous-groupes
et
Z¹ à Z³ représentent des polymères de composés vinylaromatiques de la formule générale VI 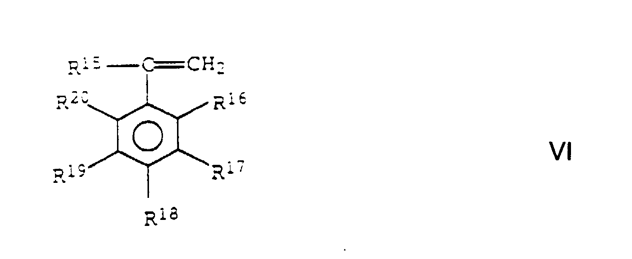
dans laquelle les substituants ont les significations qui suivent :
R¹⁵ hydrogène ou alkyle en C₁ à C₄,
R¹⁶ à R²⁰, indépendamment l'un de l'autre, hydrogène, alkyle en C₁ à C₁₂, aryle en C₆ à C₁₈, halogènes, ou où deux restes voisins forment ensemble des radicaux cycliques présentant de 4 à 15 atomes de carbone.

5. Procédé suivant l'une quelconque des revendications 1 à 4, caractérisé en ce que, à titre de composant B), on utilise des acides de Lewis forts, neutres de la formule générale
M¹X¹X²X³ (VIII)
dans laquelle
M¹ représente un élément du troisième groupe principal du système périodique,
X¹, X² et X³ représentent chacun un atome d'hydrogène, un radical alkyle en C₁ à C₁₀, un radical aryle en C₆ à C₁₅, alkylaryle, arylalkyle, halogénoalkyle ou halogénoaryle avec à chaque fois de 1 à 10 atomes de carbone dans le reste alkyle et de 6 à 20 atomes de carbone dans le reste aryle, ou un atome de fluor, de chlore, de brome ou d'iode.

6. Utilisation des polymères de composés vinylaromatiques préparés suivant les revendications 1 à 4, pour la fabrication d'articles moulés.
